# EUROPÄISCHE PATENTANMELDUNG

(11) **EP 1 884 488 A1**
(43) Veröffentlichungstag der Anmeldung: **06.02.2008**
(21) Anmeldenummer: 06014409.4
(22) Anmeldetag: 11.07.2006
(51) Int. Cl.: B65G 45/22, B65G 45/02

(54) **Fördervorrichtung für Lebensmittelbehälter**

(71) Anmelder: Chemische Fabrik Dr. Weigert GmbH & Co. KG, 20539 Hamburg (DE)
(72) Erfinder: Rath, Christian, 23879 Mölln (DE)
(74) Vertreter: Glawe, Delfs, Moll

(57) **Zusammenfassung**

Gegenstand der Erfindung ist eine Vorrichtung zum Fördern von Lebensmittelbehältern, mit wenigstens einem endlos umlaufenden Kettenglieder-Transportband 1, und mit einer Stützstruktur zum Halten und Führen des Kettenglieder-Transportbands 1, wobei die Stützstruktur räumlich zwischen dem vorlaufenden und dem rücklaufenden Abschnitt des Kettenglieder-Transportbands angeordnete Stützelemente 5, 21 zum Stützen und/oder Führen des vorlaufenden Abschnitts des Kettenglieder-Transportbands 1 aufweist. Erfindungsgemäß ist vorgesehen, dass räumlich zwischen dem vorlaufenden und dem rücklaufenden Abschnitt des Kettenglieder-Transportbands 1 wenigstens eine Reinigungsmitteldüse 31 angeordnet ist, die zum gezielten Ansprühen der zwischen dem vorlaufenden und dem rücklaufenden Abschnitt des Kettenglieder-Transportbands 1 angeordneten Stützelemente 5, 21 ausgebildet ist.

## Beschreibung

Die Erfindung betrifft eine Vorrichtung zum Fördern von Lebensmittelbehältern, mit wenigstens einem endlos umlaufenden Kettenglieder-Transportband, und mit einer Stützstruktur zum Halten und Führen des Kettenglieder-Transportbands, wobei die Stützstruktur räumlich zwischen dem vorlaufenden und dem rücklaufenden Abschnitt des Kettenglieder-Transportbands angeordnete Stützelemente zum Stützen und/oder Führen des vorlaufenden Abschnitts des Kettenglieder-Transportbands aufweist.

Industriell hergestellte Lebensmittel werden häufig maschinell in Behälter abgefüllt. Die Behälter werden mittels Fördervorrichtungen zur Abfüllstation, gegebenenfalls weiter zu einer Verschließstation und zu Verpackungsstationen geführt. Dies geschieht häufig mittels sogenannter Kettenförderer, die Transportbänder aus einer Vielzahl flexibel miteinander verbundener Kettenglieder aufweisen. Solche Kettenförderer eignen sich insbesondere für das Fördern von schweren Lebensmittelbehältern wie beispielsweise Flaschen bei der Flaschenreinigung (von wieder verwertbaren Flaschen) sowie insbesondere der Flaschenabfüllung.

Der Erfindung liegt die Aufgabe zugrunde, eine Vorrichtung der eingangs genannten Art zu schaffen, die eine einfache und hygienische Beseitigung von Verunreinigungen in der Vorrichtung ermöglicht.

Die Erfindung löst diese Aufgabe dadurch, dass räumlich zwischen dem vorlaufenden und dem rücklaufenden Abschnitt des Kettenglieder-Transportbands wenigstens eine Reinigungsmitteldüse angeordnet ist, die zum gezielten Ansprühen der zwischen dem vorlaufenden und dem rücklaufenden Abschnitt des Kettenglieder-Transportbands angeordneten Stützelemente ausgebildet ist.

Zunächst seien einige im Rahmen der Erfindung verwendete Begriffe erläutert.

Lebensmittelbehälter im Sinne der Erfindung sind sämtliche Behälter, die industriell zur Abfüllung von Lebensmitteln und Getränken aller Art Verwendung finden. Insbesondere umfasst dieser Begriff Flaschen, Dosen und sonstige Behälter, vorzugsweise aus Glas, Metall und Kunststoffen.

Die erfindungsgemäße Vorrichtung weist ein wenigstens ein endlos umlaufendes Kettenglieder-Transportband auf. Es besteht aus einer Vielzahl vorzugsweise starrer Kettenglieder, die beweglich miteinander verbunden, vorzugsweise aneinander angelenkt sind. Die Kettenglieder bestehen bevorzugt aus Metall oder einem Kunststoffmaterial.

Der Begriff Stützstruktur bezeichnet sämtliche Einrichtungen, die das Transportband halten und führen und die darauf wirkenden Kräfte in den Untergrund ableiten.

Diese Stützstruktur weist räumlich zwischen dem vorlaufenden und rücklaufenden Abschnitt des Kettenglieder-Transportbands angeordnete Stützelemente auf. Der vorlaufende Abschnitt des Transportbandes ist derjenige Abschnitt, der die Förderfunktion für die Behälter wahrnimmt. Der rücklaufende Abschnitt verläuft unterhalb des vorlaufenden Abschnitts, hier wird das Transportband wieder zum Beginn des vorlaufenden Abschnitts zurückgeführt. Vorlaufender und rücklaufender Abschnitt schließen zwischen sich einen Innenraum ein, der nachfolgend auch als Transporteurinnenraum bezeichnet wird.

Da der vorlaufende Abschnitt aufgrund der in aller Regel recht hohen zu fördernden Lasten nicht vollkommen freitragend ausgebildet sein kann, sind im Transporteurinnenraum Stützelemente zum Stützen und/oder Führen des vorlaufenden Abschnitts des Transportbandes vorgesehen. Diese Stützelemente nehmen auf den vorlaufenden Abschnitt des Transportbandes wirkende Gewichtskräfte auf und leiten diese ab. Das Transportband kann auf solchen Stützelementen unter Rollreibung oder bevorzugt unter Gleitreibung laufen. In aller Regel weisen solche Stützelemente quer zur Förderrichtung des Transportbandes und vorzugsweise über dessen gesamte Breite verlaufende Querelemente wie beispielsweise die unten noch zu erläuternden Querbleche auf, die zur Kraftaufnahme und -ableitung dienen.

Erfindungsgemäß ist vorgesehen, dass in dem Transporteurinnenraum wenigstens eine Reinigungsmitteldüse angeordnet ist, die zum gezielten Ansprühen der beschriebenen Stützelemente ausgebildet ist.

Ein erfindungsgemäßer Förderer wird im Betrieb durch Umgebungseinflüsse und insbesondere verschüttete Lebensmittel (Getränke) ständig verunreinigt. Die Verunreinigungen dringen durch das Kettenglieder-Transportband in den Transporteurinnenraum ein. Aus offenkundiger Vorbenutzung ist es bekannt, den Transporteurinnenraum in regelmäßigen Abständen manuell mit einem Hochdruckreiniger zu reinigen. Ebenfalls aus offenkundiger Vorbenutzung ist es bekannt, im Betrieb eines solchen Förderers das Kettenglieder-Transportband mit Reinigungsmittel zu besprühen. Man verlässt sich bei diesem Stand der Technik darauf, dass das umlaufende Transportband das Reinigungsmittel gleichmäßig verteilt, so dass es eine hinreichende Reinigungswirkung entfalten kann.

Die Erfindung hat erkannt, dass wesentliche Teile der im Betrieb entstehenden Verunreinigungen sich an den im Transporteurinnenraum vorhandenen Stützelementen festsetzen und durch die Reinigungsverfahren des Standes der Technik nur unzureichend entfernt werden. Erfindungsgemäß ist daher wenigstens eine Reinigungsmitteldüse vorgesehen, die diese Stützelemente gezielt ansprüht. "Gezieltes Ansprühen" in bedeutet im Rahmen der Erfindung, dass die Reinigungsmitteldüse einen gerichteten Sprühstrahl aufweist, dessen Hauptwirkrichtung solche Stützelemente unmittelbar ansprüht.

Die Stützelemente umfassen vorzugsweise quer zur Förderrichtung des Kettenglieder-Transportbandes verlaufende Querbleche. Solche Querbleche können in regelmäßigen Abständen von beispielsweise 30 - 50 cm angeordnet sein und haltern beispielsweise Führungseinrichtungen wie Schienen oder dergleichen für das oder die Kettenglieder-Transportbänder.

Im Rahmen der Erfindung ist vorzugsweise jeweils zwischen zwei solcher Querbleche mindestens eine Reinigungsmitteldüse angeordnet, die zum gezielten Ansprühen der Querbleche ausgebildet ist.

Der Transporteurinnenraum ist aus Gründen der Sicherheit für das Bedienungspersonal und der Hygiene vorzugsweise seitlich durch Seitenbleche oder (gegebenenfalls demontierbare) Seitenwangen verschlossen. Es ist im Rahmen der Erfindung bevorzugt, dass wenigstens eine Reinigungsmitteldüse zum gezielten Ansprühen auch der Seitenbleche und/oder Seitenwangen vorgesehen ist.

Das gezielte Ansprühen kann beispielsweise durch Ausbildung der Reinigungsmitteldüse als Fächerdüse erreicht werden, die im Wesentlichen fächerförmig in einer Ebene im Wesentlichen parallel zur Förderebene des Kettenglieder-Transportbandes sprüht. Vorzugsweise handelt es sich um eine Rundstrahlfächerdüse, die einen Sprühwinkel von 360 Grad in einer Ebene im Wesentlichen parallel zu der Förderebene aufweist. Sie sprüht somit in etwa tellerförmig sowohl Seitenbleche als auch Seitenwangen an. Alternativ können mehrere benachbarte Reinigungsmitteldüsen vorgesehen sein, deren Sprühwinkel aneinander angrenzen und/oder sich überlappen.

Eine erfindungsgemäße Vorrichtung weist häufig zwei oder mehr nebeneinander angeordnete endlos umlaufende Kettenglieder-Transportbänder auf. Die Transportbänder laufen, wie oben bereits ausgeführt, vorzugsweise unter Gleitreibung. Diese Gleitreibung findet bevorzugt nicht vollflächig auf der Unterseite des vorlaufenden Abschnitts statt, sondern lediglich am Rand des Transportbandes in Führungsschienen. Bei hoher Belastung kann somit ein solches Transportband nur eine begrenzte Breite aufweisen, da es sonst in der Mitte durchbiegt. Wenn die gewünschte Förderbreite der Vorrichtung die mit einem Transportband erzielbare Förderbreite übersteigt, werden daher zwei oder mehr solcher Kettenglieder-Transportbänder nebeneinander angeordnet, die mit jeweils etwa gleicher Geschwindigkeit parallel umlaufen.

Erfindungsgemäß können zusätzlich Reinigungsmitteldüsen vorgesehen sein, die zum gezielten Ansprühen der Kettenglieder-Transportbänder ausgebildet sind. Bei dieser Ausgestaltung der Erfindung ist es bevorzugt, dass getrennte Ansteuerungen für die zum Ansprühen der Kettenglieder-Transportbänder ausgebildeten Düsen und diejenigen Düsen, die zum Ansprühen der Stützelemente ausgebildet sind, vorgesehen sind.

Der Grund für diese Ausgestaltung liegt darin, dass während eines Reinigungstaktes (dieser kann während des laufenden Abfüllbetriebes oder aber bei leer laufender Vorrichtung in einer Abfüllpause stattfinden) die Düsen zum Ansprühen des Kettenglieder-Transportbandes deutlich länger in Betrieb sein müssen als die Düsen zum Ansprühen der Stützelemente. Da die Düsen zum Ansprühen des Kettenglieder-Transportbandes in der Regel nur einen kleinen Abschnitt dieses Transportbandes besprühen, müssen sie bei laufendem Transportband so lange in Betrieb sein, bis das gesamte Transportband wenigstens einmal mit Reinigungslösung besprüht ist.

Es versteht sich, dass im Rahmen der Erfindung die vorgesehenen Düsen mit unterschiedlichsten Reinigungsmitteln sowie gegebenenfalls mit Frischwasser zum Abspülen von aufgesprühten Reinigungsmitteln gespeist werden können.

Ein Ausführungsbeispiel der Erfindung wird nachfolgend anhand der Zeichnung erläutert. Darin zeigen:
- Fig. 1: schematisch eine Draufsicht auf die erfindungsgemäße Vorrichtung von oben (bei abgenommenen Kettenglieder-Transportbändern);
- Fig. 2: einen Querschnitt entlang der Linie A-A in Fig. 1;
- Fig. 3: einen Längsschnitt entlang der Linie B-B in Fig. 1.

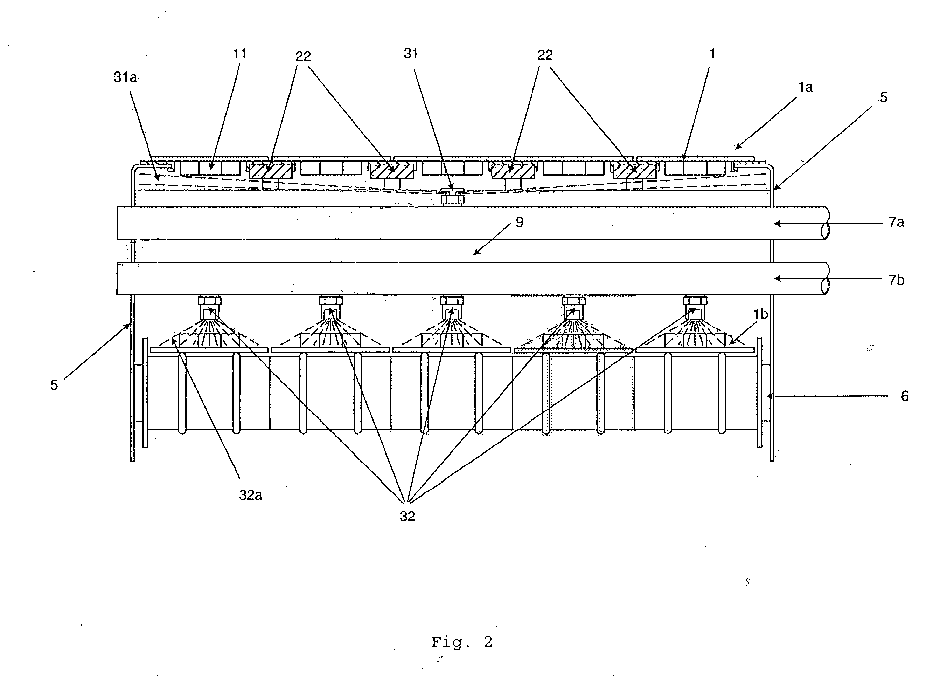

Die Vorrichtung weist fünf nebeneinander angeordnete und laufende Kettenglieder-Transportbänder 1 auf (siehe Fig. 2), deren einzelne Kettenglieder durch bei 11 angedeutete Scharnierverbindungen miteinander verbunden sind. Wie insbesondere in Fig. 2 zu erkennen ist, bildet der obere vorlaufende Abschnitt der fünf Kettenglieder-Transportbänder eine einheitliche vorlaufende Transportfläche für Flaschen, Getränkekisten oder dergleichen.

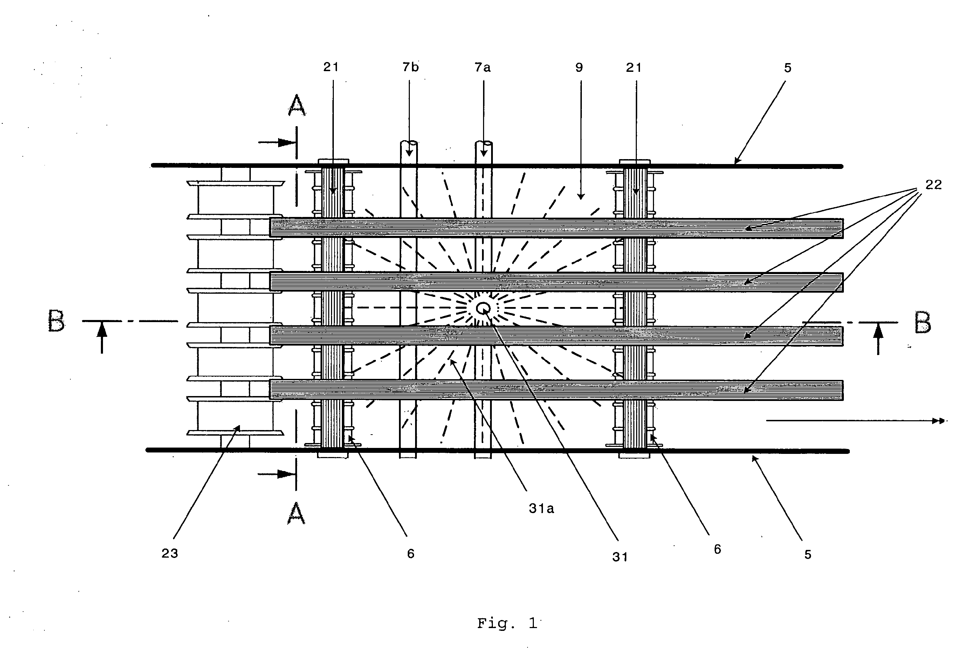

Die Randbereiche jedes Kettenglieder-Transportbandes 1 laufen im vorlaufenden Abschnitt auf Tragschienen 22 unter Gleitreibung. Diese Tragschienen 22 sind auf einer Mehrzahl von in Abständen von etwa 50 cm angeordneten Querblechen 21 angeordnet. Seitenbleche oder Seitenwangen 5 haltern die Querbleche 21 (siehe insbesondere Fig. 1) und enthalten Lager beziehungsweise Aufnahmen für Antriebs-und Umlenkrollen 23 sowie Stütz- beziehungsweise Führungsrollen 6 für den rücklaufenden Abschnitt 1b der Kettenglieder-Transportbänder 1.

Vor- und rücklaufende Abschnitte der Kettenglieder-Transportbänder schließen zwischen sich einen Transporteurinnenraum 9 ein.

Zwischen zwei Querblechen 21 ist jeweils ein Düsenstock 7a vorgesehen, der ungefähr mittig zwischen den Seitenblechen 5 und den jeweiligen Querblechen 21 eine Rundstrahl-Flachdüse 31 aufweist. Wenn diese Düse 31 mit Flüssigkeit unter Druck beaufschlagt wird, sprüht sie im Wesentlichen tellerförmig in einem Winkel von 360 Grad und in einer Ebene parallel zur Förderebene der Transportbänder 1 (siehe das schematisch bei 31a in Fig. 1 angedeutet Sprühbild). Sie besprüht somit bei Betrieb gezielt insbesondere die Querbleche 21 und die Seitenwände 5 und befreit diese sowohl durch die mechanische Einwirkung des Sprühstrahls als auch durch die chemische Wirkung gegebenenfalls vorhandener Reinigungsmittelzusätze von Verunreinigungen.

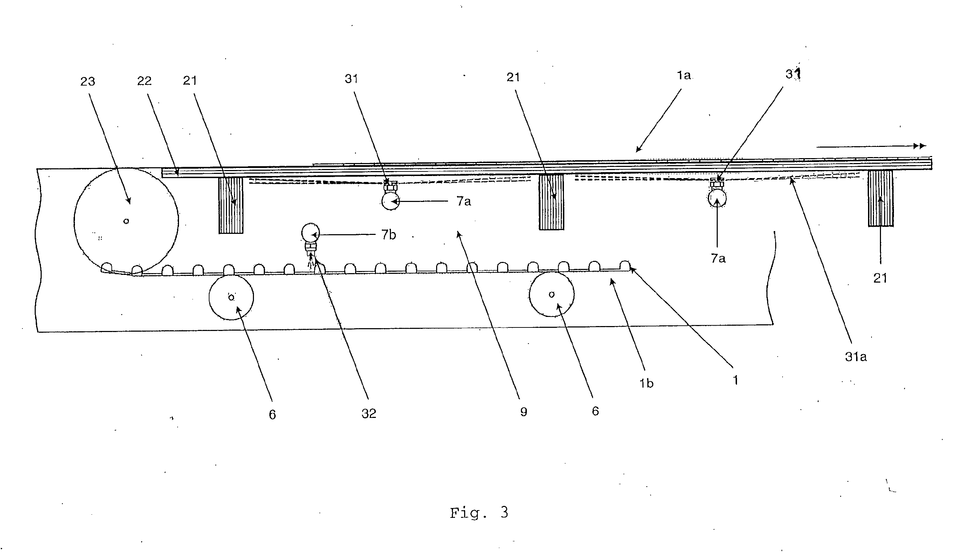

In Fig. 3 ist zu erkennen, dass jeweils zwischen zwei Querblechen 21 ein solcher Düsenstock 7a mit einer Düse 31 vorgesehen ist.

Zusätzlich ist im Transporteurinnenraum ein Düsenstock 7b vorgesehen, der fünf quer zur Förderrichtung aufgereihte Reinigungsmitteldüsen 32 aufweist. Diese sprühen gezielt nach unten auf den rücklaufenden Abschnitt 1b der Kettenglieder-Transportbänder 1. Die Düsenstöcke 7a und 7b sind getrennt ansteuerbar. Bei Bedarf können zwei oder mehr in Förderrichtung voneinander beabstandete Düsenstöcke 7b vorgesehen sein.

## Patentansprüche

1. Vorrichtung zum Fördern von Lebensmittelbehältern, mit wenigstens einem endlos umlaufenden Kettenglieder-Transportband (1), und mit einer Stützstruktur zum Halten und Führen des Kettenglieder-Transportbands (1), wobei die Stützstruktur räumlich zwischen dem vorlaufenden und dem rücklaufenden Abschnitt des Kettenglieder-Transportbands angeordnete Stützelemente (5, 21) zum Stützen und/oder Führen des vorlaufenden Abschnitts des Kettenglieder-Transportbands (1) aufweist, **dadurch gekennzeichnet, dass** räumlich zwischen dem vorlaufenden und dem rücklaufenden Abschnitt des Kettenglieder-Transportbands (1) wenigstens eine Reinigungsmitteldüse (31) angeordnet ist, die zum gezielten Ansprühen der zwischen dem vorlaufenden und dem rücklaufenden Abschnitt des Kettenglieder-Transportbands (1) angeordneten Stützelemente (5, 21) ausgebildet ist.

2. Vorrichtung nach Anspruch 1, **dadurch gekennzeichnet, dass** die Stützelemente quer zur Förderrichtung des Kettenglieder-Transportbands (1) verlaufende Querbleche (21) aufweisen.

3. Vorrichtung nach Anspruch 2, **dadurch gekennzeichnet, dass** jeweils zwischen zwei quer zur Förderrichtung des Kettenglieder-Transportbands (1) verlaufenden Querblechen (21) mindestens eine Reinigungsmitteldüse (31) angeordnet ist, die zum gezielten Ansprühen der Querbleche (21) ausgebildet ist.

4. Vorrichtung nach Anspruch 2 oder 3, **dadurch gekennzeichnet, dass** zusätzlich Seitenbleche und/oder Seitenwangen (5) vorgesehen sind, die den von dem vorlaufenden und dem rücklaufenden Abschnitt des Kettenglieder-Transportbands (1) eingeschlossenen Innenraum (9) seitlich abdecken.

5. Vorrichtung nach einem der Ansprüche 1 bis 4, **dadurch gekennzeichnet, dass** wenigstens eine Reinigungsmitteldüse (31) zum gezielten Ansprühen der Seitenbleche und/oder Seitenwangen (5) vorgesehen ist.

6. Vorrichtung nach einem der Ansprüche 1 bis 5, **dadurch gekennzeichnet, dass** wenigstens eine Reinigungsmitteldüse (31) als Fächerdüse ausgebildet ist, die zum im wesentlichen fächerförmigen Sprühen in einer Ebene im wesentlichen parallel zur Förderebene des Kettenglieder-Transportbands (1) ausgebildet ist.

7. Vorrichtung nach Anspruch 6, **dadurch gekennzeichnet, dass** wenigstens eine Reinigungsmitteldüse (31) als RundstrahlFächerdüse ausgebildet ist, die einen Sprühwinkel von 360° in einer Ebene im Wesentlichen parallel zur Förderebene des Kettenglieder-Transportbands (1) aufweist.

8. Vorrichtung nach einem der Ansprüche 1 bis 7, **dadurch gekennzeichnet, dass** sie zwei oder mehr nebeneinander angeordnete endlos umlaufende Kettenglieder-Transportbänder (1) aufweist.

9. Vorrichtung nach einem der Ansprüche 1 bis 8, **dadurch gekennzeichnet, dass** zusätzlich Reinigungsmitteldüsen (32) vorgesehen sind, die zum gezielten Ansprühen des oder der Kettenglieder-Transportbänder (1) ausgebildet sind.

10. Vorrichtung nach Anspruch 9, **dadurch gekennzeichnet, dass** getrennte Ansteuerungen für die Düsen (31), die zum gezielten Ansprühen der zwischen dem vorlaufenden und dem rücklaufenden Abschnitt des Kettenglieder-Transportbands (1) angeordneten Stützelemente (5, 21) ausgebildet sind, und diejenigen Düsen (32), die zum gezielten Ansprühen des oder der Kettenglieder-Transportbänder (1) ausgebildet sind, vorgesehen sind.
